# EUROPEAN PATENT SPECIFICATION

(11) **EP 2 624 601 B1**
(45) Date of publication and mention of the grant of the patent: **08.08.2018**
(21) Application number: 13153275.6
(22) Date of filing: 30.01.2013
(51) Int. Cl.: H04W 4/80, H04W 76/14, G06F 3/0354, G06F 3/038, H04B 7/24

(54) **Short-range radio communication system and method for operating the same**
Funkkommunikationssystem mit kurzem Bereich und Betriebsverfahren dafür
Système de communication radio à courte portée et son procédé de fonctionnement

(30) Priority: 02.02.2012 KR 20120010715
(43) Date of publication of application: 07.08.2013
(73) Proprietor: Samsung Electronics Co., Ltd., Gyeonggi-do 443-742 (KR)
(72) Inventor: Kim, Jung-Tae, Gyeonggi-do (KR); You, Ho-Sung, Gyeonggi-do (KR)
(74) Representative: Nederlandsch Octrooibureau

(56) References cited:
- WO-A2-2011/105695
- US-A- 6 002 387
- US-A1- 2003 038 790
- US-A1- 2009 022 332
- US-A1- 2010 144 273
- US-A1- 2010 190 437
- US-A1- 2011 070 834

## Description

### BACKGROUND OF THE INVENTION

### 1. Field of the Invention:

The present invention relates to a Short-range Radio Communication (SRC) system. More particularly, the present invention relates to a system for sharing information between two devices by near field communication and a method for operating the same.

### 2. Description of the Related Art:

Short-range Radio Communication (SRC) enables data exchange between devices within a short distance. Since SRC enables interactive communication through read and write operations, it is applied to various service fields such as electronic payment, ticketing, door lock, and product certification. Recently, as the utilization of SRC increases, the tendency of applying SRC to portable terminals increases.

In addition, as extensive multimedia are provided, the capabilities of portable terminals increases, and a User Interface (UI) providing a smooth interaction between a user and a portable terminal becomes more important.

Generally, in the past, SRC has been used merely to exchange simple data. There is therefore a need for a system providing a user interface capable of satisfying users and a method for operating the same.

US20110070834 discloses a Near Field Communications (NFC) tag includes a housing and a magnet carried by the housing and configured to be magnetically sensed by a magnetic sensor carried by a communications device to activate an NFC circuit within the communications device to communicate using an NFC communications protocol. A data store stores data regarding a function of the communications device to be magnetically coupled by the magnet. The data store is configured to be read by the communications device using an NFC communication protocol after the NFC circuit had been activated.

EP2541800 discloses an electronic device and a method of operating the same. The electronic device and the method of operating the electronic device may effectively form a connection between two or more electronic devices by allowing a relaying device to transfer connection information between the electronic devices to a counterpart.

US2010190437 discloses a wireless communication device is arrange lo provide at least one Near Field Communication service to a user. The wireless communication device comprises a Near Field Communication unit for storing a plurality of application elements for use in providing a plurality of Near Field Communication services, and a plurality of Near Field Communication managing elements. Each of the plurality of Near Field Communication managing elements is associated with at least one of the plurality of application elements stored in the Near Field Communication unit for managing the at least one associated application element of the plurality of application elements. A user interface element interfaces with at least some of the Near Field Communication managing elements and provides information to a user relating to the Near Field Communication services provided by the plurality of application elements associated with the al least some the Near Field Communication managing elements. In operation, the user interface element in response to user selection of a Near Field Communication service based on the user provided information is further arranged to activate the Near Field Communication managing element of the selected Near Field Communication service to manage the at least one associated application element.

US 2010/0144273 discloses a partable device, provided with communication control unit which performs communications with an external device via a first wireless communication unit of which communication distance is short and which is capable of performing high-speed communications or a second wireless communication unit of which communication distance is long compared with the first wireless communication unit and which is capable of performing low-speed communications. A communication state judging unit judges a communication state of the communications with the external device via the first wireless communication unit or the second wireless communication unit. The communication control unit performs switching between the communications with the external device via the first wireless communication unit and the communications with the external device via the second wireless communication unit based on the communication state judged by the communication state judging unit and/or a transmission data amount to be transmitted to the external device.

### SUMMARY OF THE INVENTION

Objects of the present invention are to address at least the above-mentioned problems and/or disadvantages and to provide at least the advantages described below. Accordingly, an object of the present invention is to provide a system for improving a User eXperience (UX) in exchanging information by Short-range Radio Communication (SRC) according to claim 1.

Further advantageous embodiments of the invention are defined in the dependent claims.

Other aspects, advantages, and salient features of the invention will become apparent to those skilled in the art from the following detailed description, which, taken in conjunction with the annexed drawings, discloses exemplary embodiments of the invention. The embodiments and/or examples of the following description which are not covered by the appended claims are considered as not being part of the present invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1A is a diagram illustrating a configuration of a Short-range Radio Communication (SRC) system according to an exemplary embodiment of the present invention;
FIG. 1B is a diagram illustrating a configuration of an SRC system according to an exemplary embodiment of the present invention;
FIG. 2 is a block diagram of a portable terminal according to an exemplary embodiment of the present invention;
FIG. 3 is a communication flow diagram of an SRC system according to an exemplary embodiment of the present invention;
FIG. 4A is a diagram illustrating a configuration of an SRC system according to an exemplary embodiment of the present invention;
FIG. 4B is a diagram illustrating a stylus pen according to an exemplary embodiment of the present invention;
FIG. 4C is a block diagram of a stylus pen according to an exemplary embodiment of the present invention;
FIG. 5 is a communication flow diagram of an SRC system according to an exemplary embodiment of the present invention;
FIG. 6 is a communication flow diagram of an SRC system according to an exemplary embodiment of the present invention;
FIG. 7 is a diagram illustrating a User Interface (UI) screen according to an exemplary embodiment of the present invention;
FIG. 8 is a diagram illustrating a UI screen according to an exemplary embodiment of the present invention;
FIG. 9 is a diagram illustrating a UI screen according to an exemplary embodiment of the present invention;
FIG. 10 is a diagram illustrating a UI screen according to an exemplary embodiment of the present invention;
FIG. 11 is a diagram illustrating a UI screen according to an exemplary embodiment of the present invention;
FIG. 12 is a diagram illustrating a UI screen according to an exemplary embodiment of the present invention;
FIG. 13 is a diagram illustrating a UI screen according to an exemplary embodiment of the present invention; and
FIG. 14 is a diagram illustrating a UI screen according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a system for improving a User eXperience (UX) in exchanging information by Short-range Radio Communication (SRC), and a method for operating the same. In an exemplary embodiment of the present invention, when a first terminal and a second terminal are SRC-connected, share information of the first terminal is transmitted to the second terminal. When the first terminal uses a touchscreen, a user may determine share information by touch. In an exemplary embodiment of the present invention, information exchange between the first terminal and the second terminal may be performed through a stylus pen. The SRC function of the stylus pen may be implemented as a near-field communication (NFC) function. In addition, the stylus pen includes a unit for storing information and a unit for controlling information reception/transmission from/to a counterpart terminal. The exemplary embodiments of present invention may provide an improved UX when exchanging information between devices by SRC.

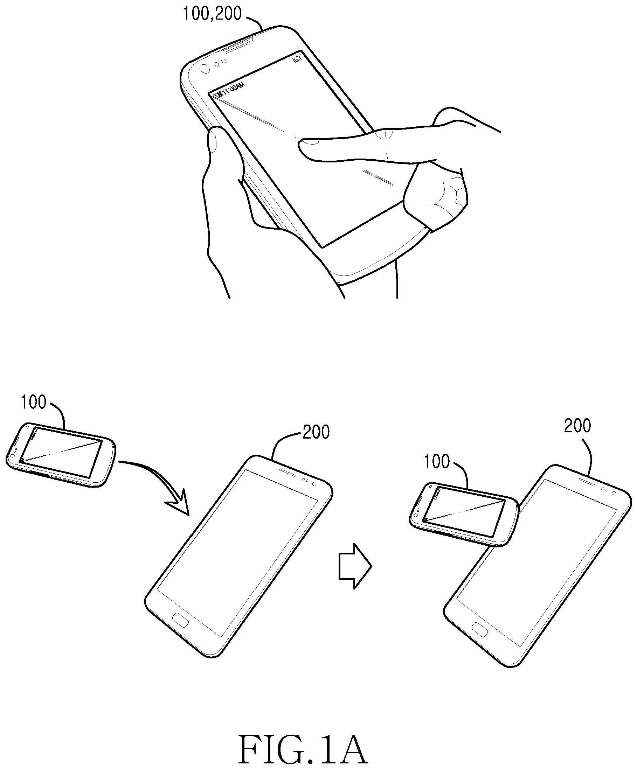

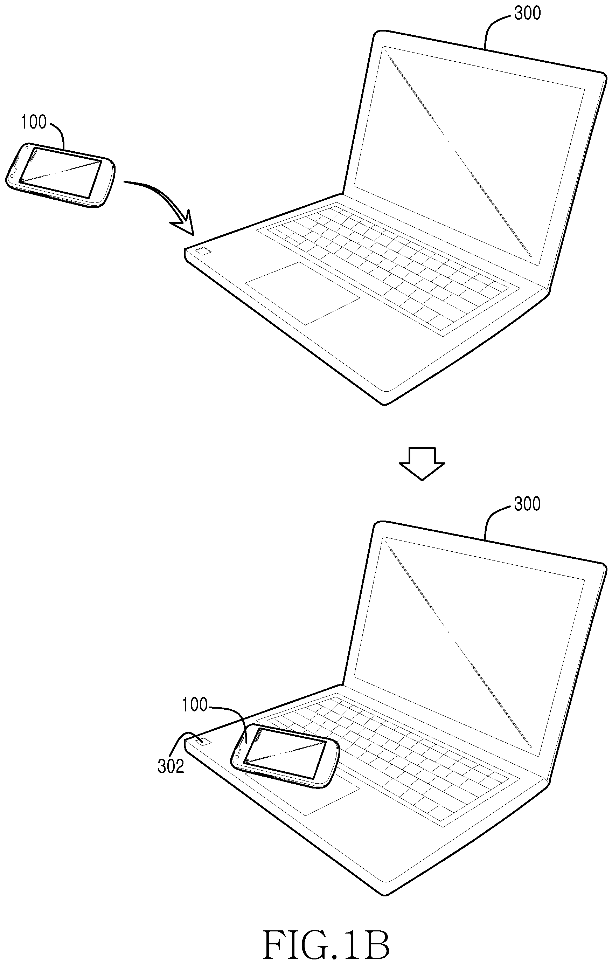

FIG. 1A illustrates a configuration of an SRC system according to an exemplary embodiment of the present invention. FIG. 1B illustrates a configuration of an SRC system according to an exemplary embodiment of the present invention.

Referring to FIGs. 1A and 1B, the SRC system may include a first terminal 100 and a second terminal 200/300 that are capable of SRC. When the first terminal 100 and the second terminal 200/300 approach and recognize each other and are SRC-connected, predetermined information of the first terminal 100 may be transmitted to the second terminal 200/300. In one exemplary embodiment, when the second terminal 300 is larger than the first terminal 100, the first terminal 100 may approach a particular portion 302 of the second terminal 300. The particular portion 302 may be visually distinguished so as to be recognizable to a user. When the first terminal 100 uses a touchscreen, a user may determine share information such as a picture, a moving image, a Uniform Resource Locator (URL), and a contact number by touch. When the first terminal 100 and the second terminal 200/300 are SRC-connected, share information of the first terminal 100 may be transmitted to the second terminal 200/300 automatically or according to user determination. The second terminal 200/300 may execute a program or process for processing information received from the first terminal 100. For example, the second terminal 200/300 may execute an image viewer to read a received picture file.

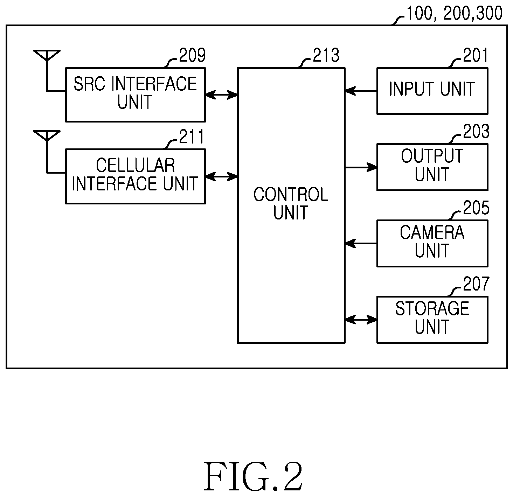

FIG. 2 is a block diagram of a terminal according to an exemplary embodiment of the present invention.

Referring to FIG. 2, the terminal 100/200/300 may include an input unit 201, an output unit 203, a camera unit 205, a storage unit 207, an SRC interface unit 209, a cellular interface unit 211, and a control unit 213. In the following description, examples of the terminal 100/200/300 include a portable terminal, a mobile phone, a mobile pad, a media player, a tablet computer, a handheld computer, and a Personal Digital Assistant (PDA). The following description will be made based on a general configuration of the above examples.

The input unit 201 may include a plurality of buttons, and output input data corresponding to the button pressed by a user, to the control unit 213. In addition, the input unit 201 may include a microphone, and output voice data corresponding to user voice, to the control unit 213. The control unit 213 may modulate the voice data received from the microphone.

The output unit 203 may include a display and a speaker, and output images or voices under the control of the control unit 213. The control unit 213 may demodulate image data and output the result to the output unit 203, and may demodulate voice data and output the result to the output unit 203.

The camera unit 205 may capture an image of an object to generate image data, and output the image data to the control unit 213. The control unit 213 may modulate the image data received from the camera unit 205.

The storage unit 207 may store a program for controlling an overall operation of the terminal 100/200/300, and various data that are input/output when a control operation of the terminal 100/200/300 is performed.

The SRC interface unit 209 may have at least one of mechanical, electrical and software configurations for SRC such as NFC, Bluetooth, and WiFi Direct, and exchange data with a counterpart terminal.

The cellular interface unit 211 may have mechanical, electrical and software configurations for cellular communication. The cellular interface unit 211 may down-convert a Radio Frequency (RF) signal received through an antenna and provide the result to the control unit 213, and may up-convert a baseband signal from the control unit 213 and transmit the result through the antenna.

The control unit 213 may control an overall operation of the terminal 100/200/300, and may process and control operations of the present invention.

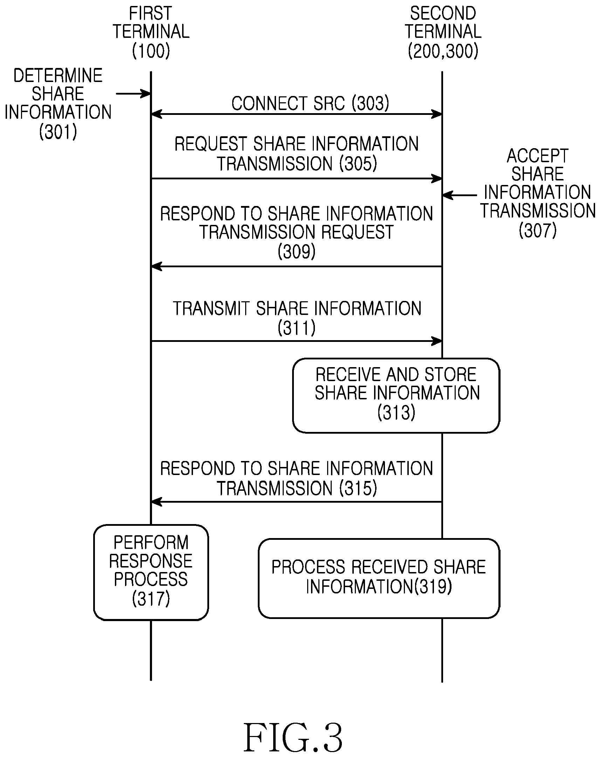

FIG. 3 is a communication flow diagram of an SRC system according to an exemplary embodiment of the present invention.

Referring to FIG. 3, a user determines share information in the first terminal 100 in step 301. When the first terminal 100 and the second terminal 200/300 approach each other and are SRC-connected in step 303, the first terminal 100 requests transmission of the determined share information to the second terminal 200/300 in step 305. The user accepts transmission of the share information to the second terminal 200/300 in step 307, and the second terminal 200/300 responds to the first terminal 100 in step 309. The first terminal 100 transmits the share information to the second terminal 200/300 in step 311, and the second terminal 200/300 receives and stores the share information from the first terminal 100 in step 313. When completing reception of the share information, the second terminal 200/300 notifies this to the first terminal 100 in step 315. The first terminal 100 performs a process corresponding to the response in step 317. For example, the first terminal 100 releases the share setting of the share information. The second terminal 200/300 executes a program or process for processing the received share information in step 319. For example, the second terminal 200/300 executes an image viewer to read a received picture file.

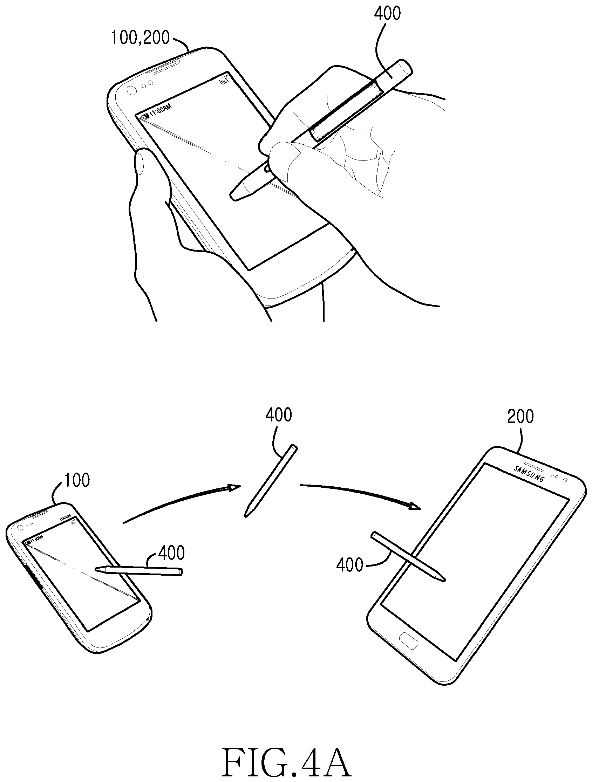

FIG. 4A is a diagram illustrating a configuration of an SRC system according to an exemplary embodiment of the present invention.

Referring to FIG. 4A, the SRC system may include a first terminal 100, a second terminal 200, and a stylus pen 400. The first terminal 100, the second terminal 200, and the stylus pen 400 have an SRC function. The stylus pen 400 is used to designate a position on a touchscreen.

The user determines share information on the touchscreen of the first terminal 100 by using the stylus pen 400. The first terminal 100 transmits the determined share information to the stylus pen 400, and the stylus pen 400 receives and stores the share information from the first terminal 100.

The stylus pen 400 and the second terminal 200 approach and recognize each other and are SRC-connected, and the stylus pen 400 transmits the stored share information to the second terminal 200 automatically or according to a user determination. The second terminal 200 executes a program or process for processing the share information received from the stylus pen 400.

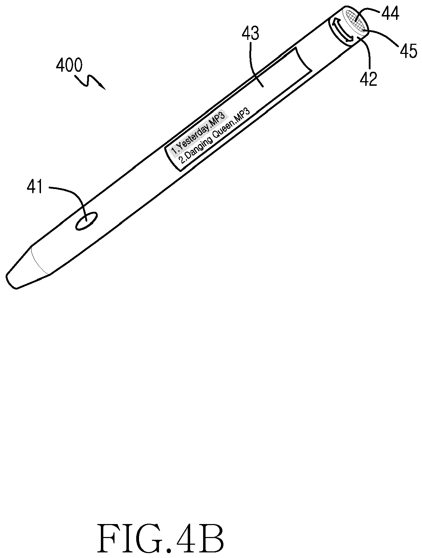

FIG. 4B is a diagram illustrating a stylus pen according to an exemplary embodiment of the present invention.

Referring to FIG. 4B, the stylus pen 400 may have a general pen shape, and may include input units 41 and 42, a display 43, a speaker 44, a microphone 45, a memory, a power supply unit, and a control unit (not shown). In addition, the stylus pen 400 may store share information to be transmitted to a counterpart terminal, in the memory, display the details of the stored share information on the display 43 to the user, and receive a control signal, such as selection and transmission of the share information, from the user through the input units 41 and 42. Also, the stylus pen 400 may reproduce an audio file stored in the memory, through the speaker 44. In addition, the stylus pen 400 may SRC-communicate with a terminal, demodulate audio data or image data received from the terminal, and output the results the display 43 and the speaker 44. In addition, the stylus pen 400 may SRC-communicate with a terminal, and transmit audio data input through the microphone 45, to the terminal. According to this configuration, the stylus pen 400 may be used for a Bluetooth call of a terminal. The control unit may control an overall operation of the stylus pen 400, and may process and control operations of the present invention.

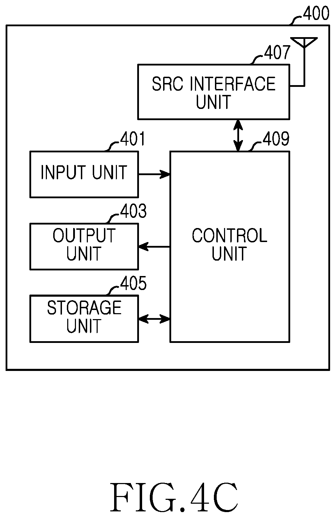

FIG. 4C is a block diagram of a stylus pen according to an exemplary embodiment of the present invention.

Referring to FIG. 4C, the stylus pen 400 may include an input unit 401, an output unit 403, a storage unit 405, an SRC interface unit 407, and a control unit 409.

The input unit 401 may include a plurality of buttons, and output input data corresponding to the button pressed by a user, to the control unit 409. In addition, the input unit 401 may include a microphone, and output voice data corresponding to user voice, to the control unit 409. The control unit 409 may modulate the voice data received from the microphone.

The output unit 403 may include a display and a speaker, and output images or voices under the control of the control unit 409. The control unit 409 may demodulate image data and output the result to the output unit 403, and may demodulate voice data and output the result to the output unit 403.

The storage unit 405 may store a program for controlling an overall operation of the stylus pen 400, and various data that are input/output when a control operation of the stylus pen 400 is performed.

The SRC interface unit 407 may have mechanical, electrical and software configurations for SRC such as NFC, Bluetooth, and WiFi Direct, and exchange data with a counterpart terminal.

The control unit 409 may control an overall operation of the stylus pen 400, and may process and control operations of the present invention.

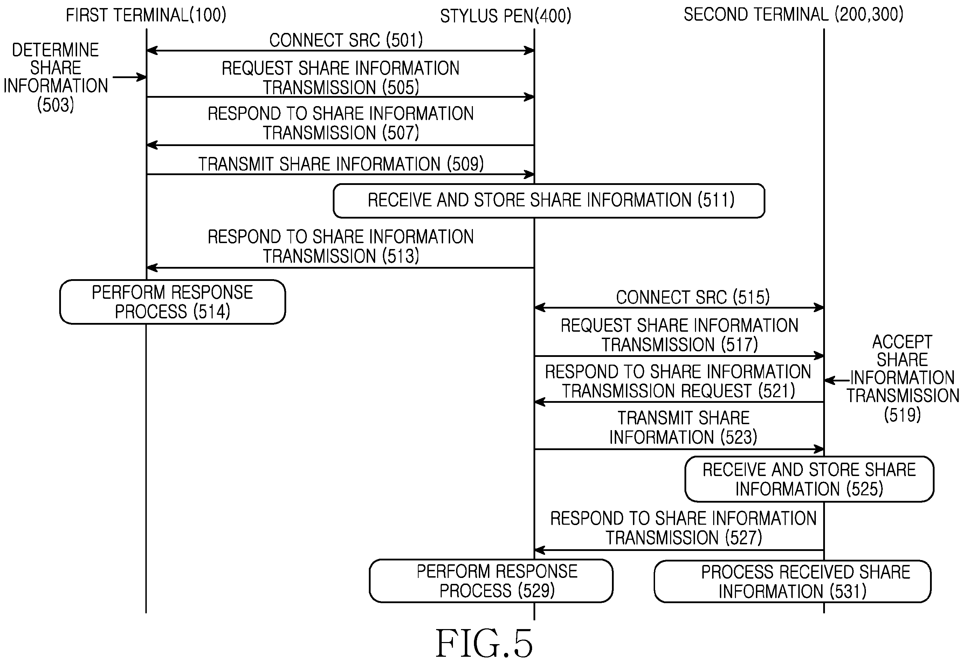

FIG. 5 is a communication flow diagram of an SRC system according to an exemplary embodiment of the present invention.

Referring to FIG. 4, a first terminal 100 and a stylus pen 400 are SRC-connected in step 501, and a user determines share information on a touchscreen of the first terminal 100 by using the stylus pen 400 in step 503. The first terminal 100 requests transmission of the determined share information to the stylus pen 400 in step 505. The stylus pen 400 responds to the share information transmission in step 507, and the first terminal 100 transmits the share information to the stylus pen 400 in step 509. The stylus pen 400 receives and stores the share information from the first terminal 100 in step 511, and notifies of the completion of reception of the share information to the first terminal 100 in step 513. The first terminal 100 performs a process corresponding to the notification in step 514. For example, the first terminal 100 releases the determination of the share information.

The stylus pen 400 and a second terminal 200/300 are SRC-connected in step 515, and the stylus pen 400 requests transmission of the determined share information to the second terminal 200/300 in step 517. The user accepts transmission of the share information to the second terminal 200/300 in step 519, and the second terminal 200/300 responds to the share information transmission request in step 521. The stylus pen 400 transmits the share information to the second terminal 200/300 in step 523. The second terminal 200/300 receives and stores the share information from the stylus pen 400 in step 525, and notifies of the completion of reception of the share information to the stylus pen 400 in step 527. The stylus pen 400 performs a process corresponding to the notification in step 529. For example, the stylus pen 400 may delete the share information. The second terminal 200/300 executes a program or process for processing the received share information in step 531, an example of which will be described below with reference to the drawings.

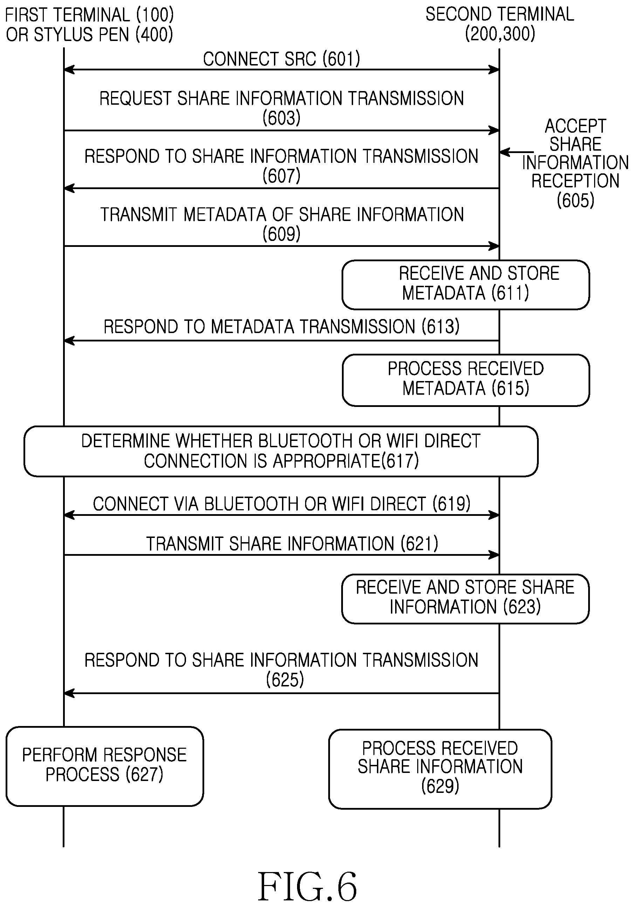

FIG. 6 is a communication flow diagram of an SRC system according to an exemplary embodiment of the present invention.

Referring to FIG. 6, a first terminal 100 or a stylus pen 400 is NFC-connected to a second terminal 200/300 in step 601, and the first terminal 100 or the stylus pen 400 requests transmission of share information to the second terminal 200/300 in step 603. A user accepts transmission of the share information in step 605, and the second terminal 200/300 responds to the share information transmission request in step 607. The first terminal 100 or the stylus pen 400 transmits metadata of the share information to the second terminal 200/300 in step 609. The second terminal 200/300 receives and stores the metadata from the first terminal 100 or the stylus pen 400 in step 611, and notifies of the completion of reception of the metadata to the terminal 100 or the stylus pen 400 in step 613. The second terminal 200/300 executes a program or process for processing the received metadata in step 615. For example, the second terminal 200/300 provides the user with content, format, right condition, and creator information of the share information. At least one of the first terminal 100, the stylus pen 400 and the second terminal 200/300 determines from the metadata whether a Bluetooth or WiFi Direct connection is necessary. When the amount of share information is considerable, it may be difficult to transmit the share data through the NFC connection. Therefore, using Bluetooth or WiFi Direct, which provides a higher data rate than NFC, may be more appropriate. When the Bluetooth or WiFi Direct connection is not necessary, the NFC connection is used to follow the process described above with reference to FIGs. 3 and 5. When the Bluetooth or WiFi Direct connection is more appropriate in step 617, the first terminal 100 or the stylus pen 400 and the second terminal 200/300 are Bluetooth or WiFi Direct-connected through authentication in step 619. The first terminal 100 or the stylus pen 400 transmits the share information to the second terminal 200/300 in step 621. The second terminal 200/300 receives and stores the share information from the first terminal 100 or the stylus pen 400 in step 623, and notifies of the completion of reception of the share information to the terminal 100 or the stylus pen 400 in step 625. The first terminal 100 or the stylus pen 400 performs a process corresponding to the notification in step 627. For example, the first terminal 100 or the stylus pen 400 deletes the share information. The second terminal 200/300 executes a program or process for processing the received share information in step 629, an example of which will be described below with reference to the drawings.

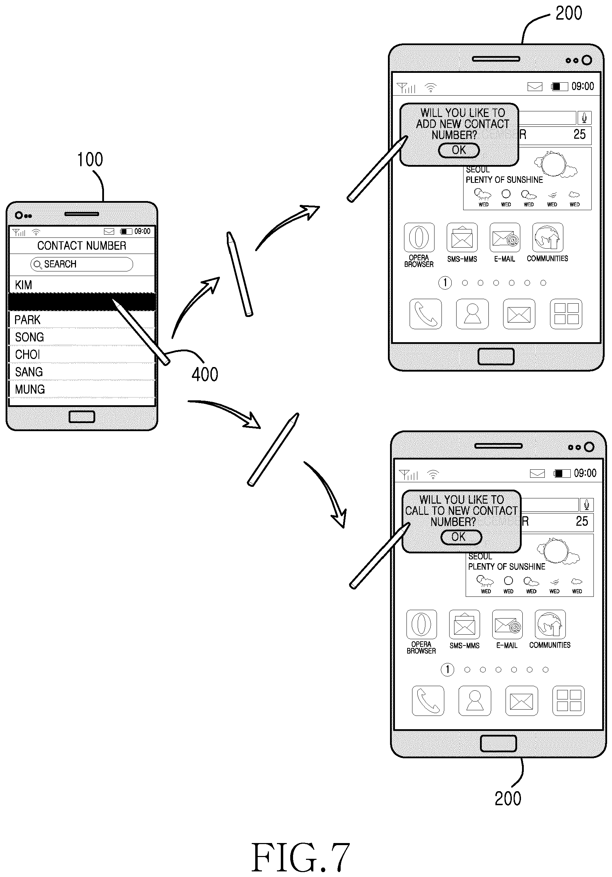

Fig. 7 illustrates a User Interface (UI) screen according to an exemplary embodiment of the present invention.

Referring to FIG. 7, a user touches at least one contact number in a contact number list on a touchscreen of a first terminal 100 by using a stylus pen 400. The first terminal 100 transmits contact number information touched with the stylus pen 400 to the stylus pen 400 by using at least one of NFC, Bluetooth and WiFi Direct, and the stylus pen 400 receives and stores the contact number information from the first terminal 100. When the user touches a touchscreen of a second terminal 200 by using the stylus pen 400, the stylus pen 400 transmits the stored contact number information received from the first terminal 100, to the second terminal 200 by using at least one of NFC, Bluetooth and WiFi Direct. The second terminal 200 receives the contact number information from the stylus pen 400, and executes a program or process for processing the received contact number information. For example, the second terminal 200 performs contact number registration, a call, or the like.

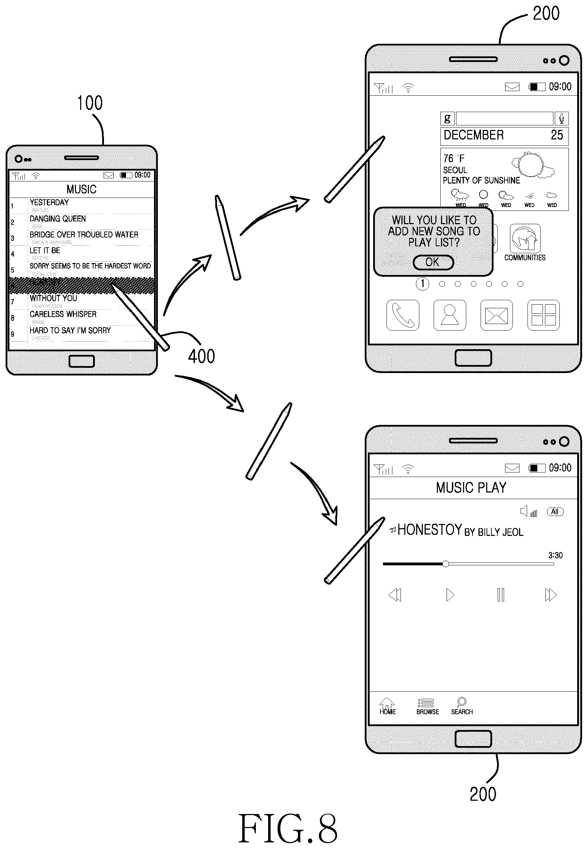

Fig. 8 illustrates a UI screen according to an exemplary embodiment of the present invention.

Referring to FIG. 8, a user touches at least one music file in a music list on a touchscreen of a first terminal 100 by using a stylus pen 400. The first terminal 100 transmits the touched music file to the stylus pen 400 by using at least one of NFC, Bluetooth and WiFi Direct, and the stylus pen 400 receives and stores the music file from the first terminal 100. When the user touches a touchscreen of a second terminal 200 by using the stylus pen 400, the stylus pen 400 transmits the stored music file received from the first terminal 100, to the second terminal 200 by using at least one of NFC, Bluetooth and WiFi Direct. The second terminal 200 receives the music file from the stylus pen 400, and executes a program or process for processing the received music file. For example, the second terminal 200 performs addition to a play list, reproduction through a music play program, or the like.

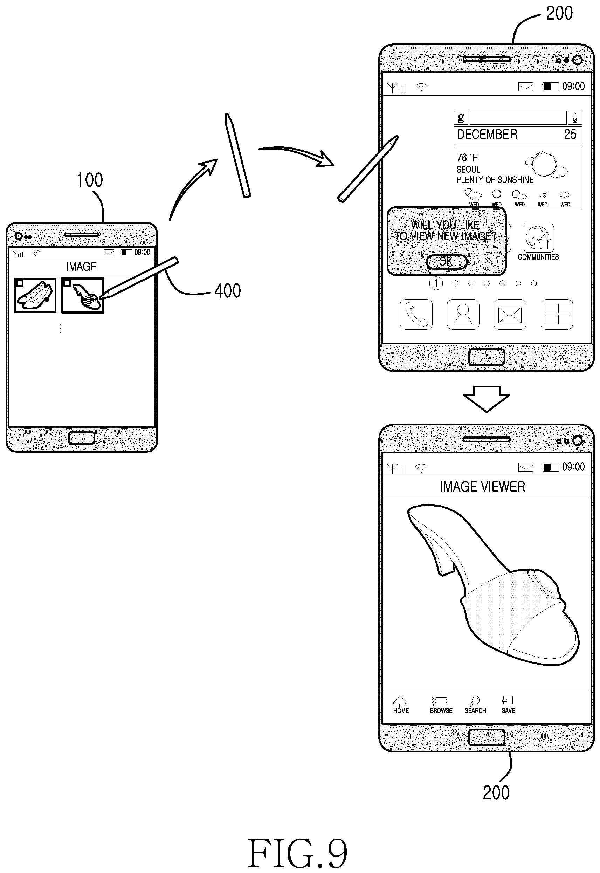

Fig. 9 illustrates a UI screen according to an exemplary embodiment of the present invention.

Referring to FIG. 9, a user touches at least one picture file in an image thumbnail on a touchscreen of a first terminal 100 by using a stylus pen 400. The first terminal 100 transmits the touched picture file to the stylus pen 400 by using at least one of NFC, Bluetooth and WiFi Direct, and the stylus pen 400 receives and stores the picture file from the first terminal 100. When the user touches a touchscreen of a second terminal 200 by using the stylus pen 400, the stylus pen 400 transmits the stored picture file received from the first terminal 100, to the second terminal 200 by using at least one of NFC, Bluetooth and WiFi Direct. The second terminal 200 receives the picture file from the stylus pen 400, and executes a program or process for processing the received picture file. For example, the second terminal 200 opens the received picture file through an image viewer.

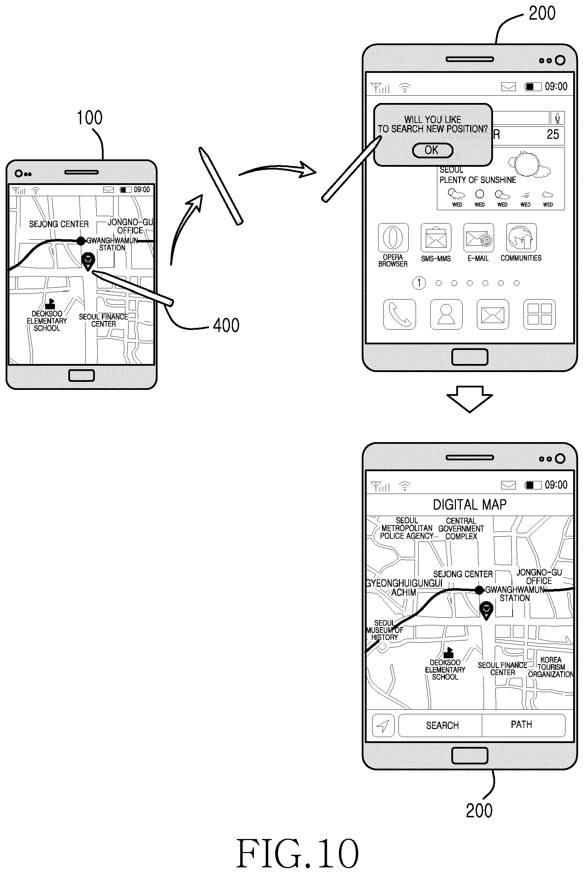

Fig. 10 illustrates a UI screen according to an exemplary embodiment of the present invention.

Referring to FIG. 10, a user designates a position in an electronic map on a touchscreen of a first terminal 100 by using a stylus pen 400. The first terminal 100 transmits the designated position information to the stylus pen 400 by using at least one of NFC, Bluetooth and WiFi Direct, and the stylus pen 400 receives and stores the position information from the first terminal 100. When the user touches a touchscreen of a second terminal 200 by using the stylus pen 400, the stylus pen 400 transmits the stored position information received from the first terminal 100, to the second terminal 200 by using at least one of NFC, Bluetooth and WiFi Direct. The second terminal 200 receives the position information from the stylus pen 400, and executes a program or process for processing the received position information. For example, the second terminal 200 performs a position search through an electronic map.

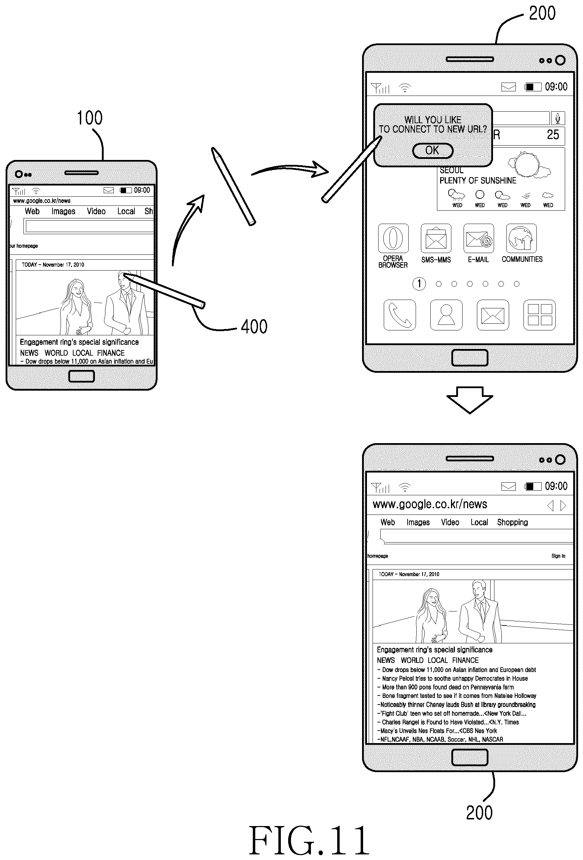

Fig. 11 illustrates a UI screen according to an exemplary embodiment of the present invention.

Referring to FIG. 11, a user touches a webpage on a touchscreen of a first terminal 100 by using a stylus pen 400. The first terminal 100 transmits a URL of the webpage to the stylus pen 400 by using at least one of NFC, Bluetooth and WiFi Direct, and the stylus pen 400 receives and stores the URL from the first terminal 100. When the user touches a touchscreen of a second terminal 200 by using the stylus pen 400, the stylus pen 400 transmits the stored URL received from the first terminal 100, to the second terminal 200 by using at least one of NFC, Bluetooth and WiFi Direct. The second terminal 200 receives the URL from the stylus pen 400, and executes a program or process for processing the received URL. For example, the second terminal 200 connects to the URL through a web viewer.

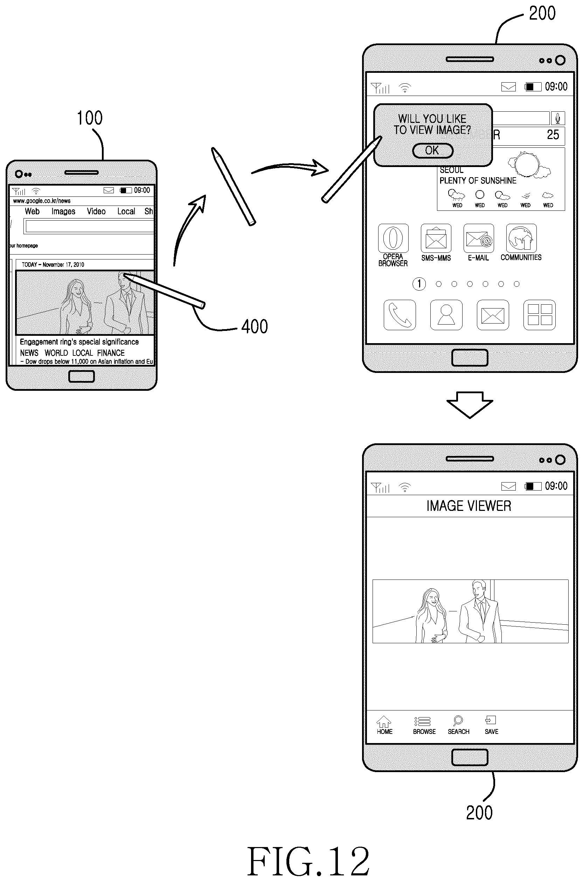

Fig. 12 illustrates a UI screen according to an exemplary embodiment of the present invention.

Referring to FIG. 12, a user touches a multimedia object (e.g., an image or text) in a webpage on a touchscreen of a first terminal 100 by using a stylus pen 400. The first terminal 100 downloads the touched multimedia object from a server, and transmits the downloaded multimedia object to the stylus pen 400 by using at least one of NFC, Bluetooth and WiFi Direct. The stylus pen 400 receives and stores the multimedia object from the first terminal 100. When the user touches a touchscreen of a second terminal 200 by using the stylus pen 400, the stylus pen 400 transmits the stored multimedia object to the second terminal 200 by using at least one of NFC, Bluetooth and WiFi Direct. The second terminal 200 receives the multimedia object from the stylus pen 400, and executes a program or process for processing the received multimedia object. For example, the second terminal 200 opens the multimedia object through a text viewer or an image viewer.

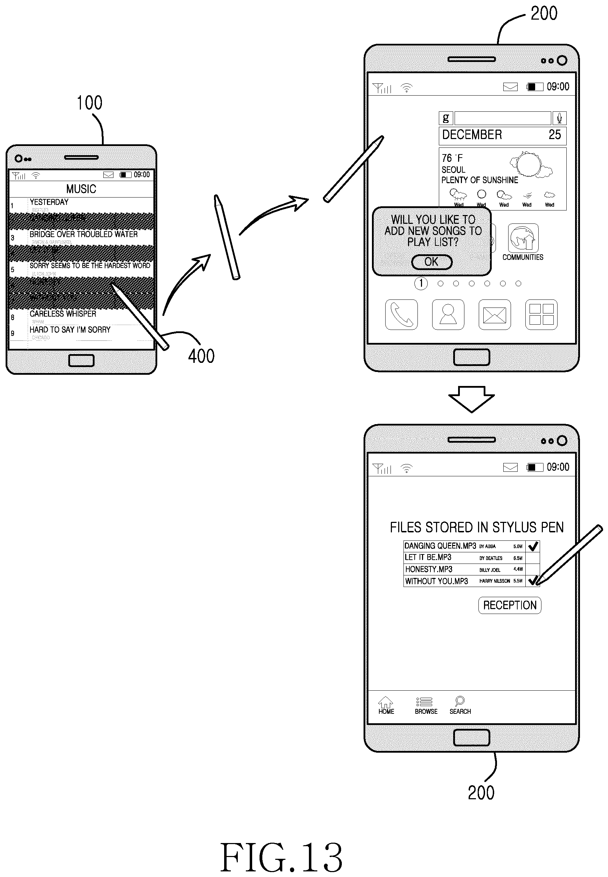

Fig. 13 illustrates a UI screen according to an exemplary embodiment of the present invention.

Referring to FIG. 13, a user touches a plurality of music files in a music list on a touchscreen of a first terminal 100 by using a stylus pen 400. The first terminal 100 transmits the touched music files to the stylus pen 400 by using at least one of NFC, Bluetooth and WiFi Direct, and the stylus pen 400 receives and stores the music files from the first terminal 100. When the user touches a touchscreen of a second terminal 200 by using the stylus pen 400, the stylus pen 400 transmits the stored music files received from the first terminal 100, to the second terminal 200 by using at least one of NFC, Bluetooth and WiFi Direct. As described above, the stylus pen 400 may beforehand transmit metadata of music files to the second terminal 100, and the second terminal 200 may process the metadata and display a list of music files, which may be received from the stylus pen 400, to the user. The user may select a desired music file from the list. The second terminal 200 may request transmission of the music files selected by the user, from the stylus pen 400, and receive the selected music files from the stylus pen 400.

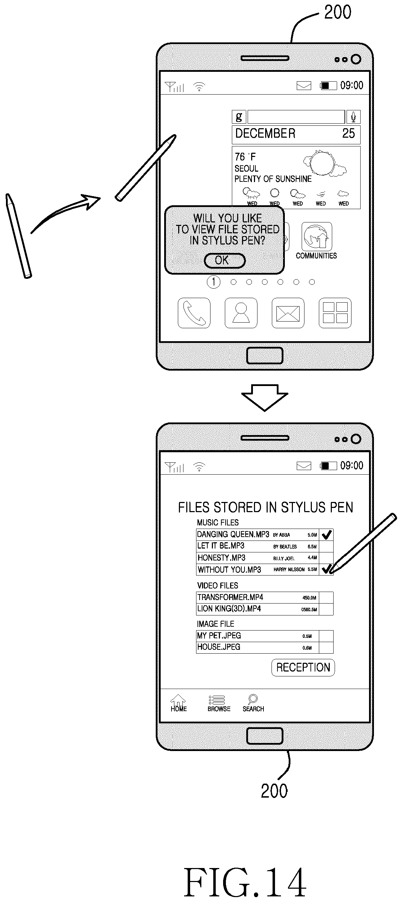

Fig. 14 illustrates a UI screen according to an exemplary embodiment of the present invention.

When a user touches the touchscreen of the second terminal 200 by using the stylus pen 400, the stylus pen 400 transmits metadata of prestored information to the second terminal 200 by using at least one of NFC, Bluetooth and WiFi Direct. The second terminal 200 may process the metadata, generate a list of the information provided by the stylus pen 400, and display the list to the user. The user may select desired information from the list. The second terminal 200 may request transmission of the information selected by the user, from the stylus pen 400, and receive the selected information from the stylus pen 400.

Consequently, by directly or indirectly using the SRC system and the operating method thereof according to the exemplary embodiments of the present invention, the user experience in exchanging information by SRC may be enhanced.

It will be appreciated that embodiments of the present invention according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope will be construed as being included in the present invention.

## Claims

1. A communication system comprising an electronic device (100, 300) and a stylus pen (400) capable of connecting to each other by one or more Short-range-Radio Communications, SRCs, the electronic device comprising:
a touch screen configured to receive a touch input by the stylus pen; an interface unit (209) configured to communicate, with the stylus pen, via the one or more SRCs; and
a control unit (213) configured to:
display contents on the touch screen,
detect a touch input by the stylus pen on the touch screen,
determine at least one content of the displayed contents based on the detected touch input, and
transmit the determined at least one content to the stylus pen via the one or more SRCs,
wherein the control unit (213) is configured to:
transmit (609) metadata describing the determined at least one content to the stylus pen via a first SRC,
determine (617), from the metadata describing the determined at least one content, whether a second SRC is needed to transmit the determined at least one content, wherein the second SRC provides a higher data rate than a first SRC,
if the second SRC is needed to transmit the determined at least one content, connect to the stylus pen by the second SRC, and transmit the determined at least one content to the stylus pen via the second SRC, and
if the second SRC is not needed to transmit the determined at least one content, transmit the determined at least one content to the stylus pen via the first SRC.

2. The communication system of claim 1, wherein the control unit is further configured to receive at least one second content from the stylus pen (400) through the one or more SRCs.

3. The communication system of claim 2, wherein the control unit is configured to:
receive metadata describing the at least one second content from the stylus pen;
display, on the touch screen, a list of based on the received metadata describing the at least one second content;
detect a touch input by the stylus pen on the touch screen to select at least one list entry in the displayed list; and
receive the at least one second content from the stylus pen according to the selected at least one list entry.

4. The communication system of claim 2, wherein the control unit is further configured to:
receive second metadata describing the at least one second contents from the stylus pen via a third SRC,
determine, from the second metadata describing the at least one second content, whether a fourth SRC is needed to receive the at least one second content, wherein the fourth SRC provides a higher data rate than a third SRC,
if the fourth SRC is needed to receive the at least one second content, connect to the stylus pen by the fourth SRC, and receiving the at least one second content from the stylus pen via the fourth SRC, and
if the fourth SRC is not needed to receive the at least one second content, receive the at least one second content from the stylus pen via the third SRC.

5. The communication system of claim 2, wherein the at least one content includes at least one of image data, audio data, map location data, contact information, and a uniform resource locator, URL.

6. The communication system of claim 5, wherein the control unit is further configured to:
select an application for outputting the received at least one second content, and
execute the selected application to output the received at least one second content.

7. The communication system of claim 6, wherein the control unit is further configured to execute an image view application to display image data when the received at least one second content includes the image data.

8. The communication system of claim 6, wherein the control unit is further configured to execute an audio play application to output audio data when the received at least one second content includes the audio data.

9. The communication system of claim 6, wherein the control unit is further configured to execute an electronic map application to display map location data when the received at least one second content includes the map location data.

10. The communication system of claim 6, wherein the control unit is further configured to execute a contact number registration application to register contact information when the received at least one second content includes the contact information.

11. The communication system of claim 6, wherein the control unit is further configured to execute a web view application to access an URL when the received at least one second content includes the URL

## Patentansprüche

1. Kommunikationssystem, umfassend eine elektronische Vorrichtung (100, 300) und einen Eingabestift (400), die in der Lage sind, sich miteinander durch eine oder mehrere Funkkommunikationen mit kurzer Reichweite, Short-range-Radio Communications - SRCs, zu verbinden, wobei die elektronische Vorrichtung Folgendes umfasst:
ein Berührungsbildschirm, der konfiguriert ist, eine Berührungseingabe von dem Eingabestift zu empfangen;
eine Schnittstelleneinheit (209), die konfiguriert ist, mit dem Eingabestift über die eine oder die mehreren SRCs zu kommunizieren; und
eine Steuereinheit (213), die konfiguriert ist zum:
Anzeigen von Inhalten auf dem Berührungsbildschirm,
Erkennen einer Berührungseingabe durch den Eingabestift auf dem Berührungsbildschirm,
Bestimmen mindestens eines Inhalts der angezeigten Inhalte basierend auf der erkannten Berührungseingabe, und
Übertragen des bestimmten mindestens einen Inhalts an den Eingabestift über die eine oder die mehreren SRCs,
wobei die Steuereinheit (213) zu Folgendem konfiguriert ist:
Übertragen (609) von Metadaten, die den bestimmten mindestens einen Inhalt beschreiben, über eine erste SRC an den Eingabestift,
Bestimmen (617) aus den Metadaten, die den bestimmten mindestens einen Inhalt beschreiben, ob eine zweite SRC benötigt wird, um den bestimmten mindestens einen Inhalt zu übertragen, wobei die zweite SRC eine höhere Datenrate bereitstellt als eine erste SRC,
falls die zweite SRC benötigt wird, um den bestimmten mindestens einen Inhalt zu übertragen, Verbinden mit dem Eingabestift durch die zweite SRC und Übertragen des bestimmten mindestens einen Inhalts an den Eingabestift über die zweite SRC, und
falls die zweite SRC nicht benötigt wird, um den bestimmten mindestens einen Inhalt zu übertragen, Übertragen des bestimmten mindestens einen Inhalts an den Eingabestift über die zweite SRC.

2. Kommunikationssystem nach Anspruch 1, wobei die Steuereinheit ferner konfiguriert ist, mindestens einen zweiten Inhalt von dem Eingabestift (400) durch die eine oder die mehreren SRCs zu empfangen.

3. Kommunikationssystem nach Anspruch 2, wobei die Steuereinheit zu Folgendem konfiguriert ist:
Empfangen von Metadaten, die den mindestens einen zweiten Inhalt beschreiben, von dem Eingabestift;
Anzeigen, auf dem Berührungsbildschirm, einer Liste basierend auf den empfangenen Metadaten, die den mindestens einen zweiten Inhalt beschreiben;
Erkennen einer Berührungseingabe durch den Eingabestift auf dem Berührungsbildschirm, um mindestens einen Listeneintrag in der angezeigten Liste auszuwählen; und
Empfangen des mindestens einen zweiten Inhalts von dem Eingabestift gemäß dem ausgewählten mindestens einen Listeneintrag.

4. Kommunikationssystem nach Anspruch 2, wobei die Steuereinheit ferner zu Folgendem konfiguriert ist:
Empfangen von zweiten Metadaten, die den mindestens einen zweiten Inhalt beschreiben, von dem Eingabestift über eine dritte SRC;
Bestimmen, aus den zweiten Metadaten, die den bestimmten mindestens einen zweiten Inhalt beschreiben, ob eine vierte SRC benötigt wird, um den bestimmten mindestens einen zweiten Inhalt zu empfangen, wobei die vierte SRC eine höhere Datenrate bereitstellt als eine dritte SRC,
falls die vierte SRC benötigt wird, um den bestimmten mindestens einen zweiten Inhalt zu empfangen, Verbinden mit dem Eingabestift durch die vierte SRC und Empfangen des mindestens einen zweiten Inhalts von dem Eingabestift über die vierte SRC, und
falls die vierte SRC benötigt wird, um den bestimmten mindestens einen zweiten Inhalt zu empfangen, Empfangen des mindestens einen zweiten Inhalts von dem Eingabestift über die vierte SRC.

5. Kommunikationssystem nach Anspruch 2, wobei der mindestens eine Inhalt mindestens eines von Bilddaten, Audiodaten, Kartenpositionsdaten, Kontaktinformationen und einem Uniform Resource Locator, URL, aufweist.

6. Kommunikationssystem nach Anspruch 5, wobei die Steuereinheit ferner zu Folgendem konfiguriert ist:
Auswählen einer Anwendung zum Ausgeben des empfangenen mindestens einen zweiten Inhalts, und
Ausführen der ausgewählten Anwendung aus, um den empfangenen mindestens einen zweiten Inhalt auszugeben.

7. Kommunikationssystem nach Anspruch 6, wobei die Steuereinheit ferner konfiguriert ist, eine Bildansichtsanwendung zum Anzeigen von Bilddaten auszuführen, wenn der empfangene mindestens eine zweite Inhalt die Bilddaten aufweist.

8. Kommunikationssystem nach Anspruch 6, wobei die Steuereinheit ferner konfiguriert ist, eine Audioabspielanwendung zum Ausgeben von Audiodaten auszuführen, wenn der empfangene mindestens eine zweite Inhalt die Audiodaten aufweist.

9. Kommunikationssystem nach Anspruch 6, wobei die Steuereinheit ferner konfiguriert ist, eine elektronische Kartenanwendung zum Anzeigen von Kartenpositionsdaten auszuführen, wenn der empfangene mindestens eine zweite Inhalt die Kartenpositionsdaten aufweist.

10. Kommunikationssystem nach Anspruch 6, wobei die Steuereinheit ferner konfiguriert ist, eine Kontaktnummerregistrierungsanwendung zum Registrieren von Kontaktinformationen auszuführen, wenn der empfangene mindestens eine zweite Inhalt die Kontaktinformationen aufweist.

11. Kommunikationssystem nach Anspruch 6, wobei die Steuereinheit ferner konfiguriert ist, eine Webansichtsanwendung zum Zugreifen auf einen URL auszuführen, wenn der empfangene mindestens eine zweite Inhalt den URL aufweist.

## Revendications

1. Système de communication comprenant un dispositif électronique (100, 300) et un stylet (400) capables de se connecter l'un à l'autre par une ou plusieurs radiocommunications de courte portée, SRC, le dispositif électronique comprenant :
un écran tactile configuré pour recevoir une entrée de toucher par le stylet ;
une unité d'interface (209) configurée pour communiquer, avec le stylet, par l'intermédiaire de l'une ou plusieurs SRC ; et
une unité de commande (213) configurée pour :
afficher des contenus sur l'écran tactile,
détecter une entrée de toucher par le stylet sur l'écran tactile,
déterminer au moins un contenu parmi les contenus affichés sur la base de l'entrée de toucher détectée, et
transmettre l'au moins un contenu déterminé au stylet par l'intermédiaire de l'une ou plusieurs SRC,
dans lequel l'unité de commande (213) est configurée pour :
transmettre (609) des métadonnées décrivant l'au moins un contenu déterminé au stylet par l'intermédiaire d'une première SRC,
déterminer (617), à partir des métadonnées décrivant l'au moins un contenu déterminé, si une deuxième SRC est nécessaire pour transmettre l'au moins un contenu déterminé, dans lequel la deuxième SRC fournit un débit de données supérieur à celui d'une première SRC,
si la deuxième SRC est nécessaire pour transmettre l'au moins un contenu déterminé, se connecter au stylet par la deuxième SRC, et transmettre l'au moins un contenu déterminé au stylet par l'intermédiaire de la deuxième SRC, et
si la deuxième SRC n'est pas nécessaire pour transmettre l'au moins un contenu déterminé, transmettre l'au moins un contenu déterminé au stylet par l'intermédiaire de la première SRC.

2. Système de communication selon la revendication 1, dans lequel l'unité de commande est en outre configurée pour recevoir au moins un deuxième contenu en provenance du stylet (400) par l'intermédiaire de l'une ou plusieurs SRC.

3. Système de communication selon la revendication 2, dans lequel l'unité de commande est configurée pour :
recevoir des métadonnées décrivant l'au moins un deuxième contenu en provenance du stylet ;
afficher, sur l'écran tactile, une liste basée sur les métadonnées reçues décrivant l'au moins un deuxième contenu ;
détecter une entrée de toucher par le stylet sur l'écran tactile pour sélectionner au moins une entrée de liste dans la liste affichée ; et
recevoir l'au moins un deuxième contenu en provenance du stylet en fonction de l'au moins une entrée de liste sélectionnée.

4. Système de communication selon la revendication 2, dans lequel l'unité de commande est en outre configurée pour :
recevoir des deuxièmes métadonnées décrivant l'au moins un deuxième contenu en provenance du stylet par l'intermédiaire d'une troisième SRC,
déterminer, à partir des deuxièmes métadonnées décrivant l'au moins un deuxième contenu, si une quatrième SRC est nécessaire pour recevoir l'au moins un deuxième contenu, dans lequel la quatrième SRC fournit un débit de données supérieur à celui d'une troisième SRC,
si la quatrième SRC est nécessaire pour recevoir l'au moins un deuxième contenu, se connecter au stylet par la quatrième SRC et recevoir l'au moins un deuxième contenu en provenance du stylet par l'intermédiaire de la quatrième SRC, et
si la quatrième SRC n'est pas nécessaire pour recevoir l'au moins un deuxième contenu, recevoir l'au moins un deuxième contenu en provenance du stylet par l'intermédiaire de la troisième SRC.

5. Système de communication selon la revendication 2, dans lequel l'au moins un contenu comprend au moins l'un de données d'image, de données audio, de données d'emplacement de carte, d'informations de contact et d'un localisateur de ressource uniforme, URL.

6. Système de communication selon la revendication 5, dans lequel l'unité de commande est en outre configurée pour :
sélectionner une application pour délivrer l'au moins un deuxième contenu reçu, et
exécuter l'application sélectionnée pour délivrer l'au moins un deuxième contenu reçu.

7. Système de communication selon la revendication 6, dans lequel l'unité de commande est en outre configurée pour exécuter une application de visualisation d'image pour afficher des données d'image lorsque l'au moins un deuxième contenu reçu comprend les données d'image.

8. Système de communication selon la revendication 6, dans lequel l'unité de commande est en outre configurée pour exécuter une application de lecture audio pour délivrer des données audio lorsque l'au moins un deuxième contenu reçu comprend les données audio.

9. Système de communication selon la revendication 6, dans lequel l'unité de commande est en outre configurée pour exécuter une application de carte électronique pour afficher des données d'emplacement de carte lorsque l'au moins un deuxième contenu reçu comprend les données d'emplacement de carte.

10. Système de communication selon la revendication 6, dans lequel l'unité de commande est en outre configurée pour exécuter une application d'enregistrement de numéro de contact pour enregistrer des informations de contact lorsque l'au moins un deuxième contenu reçu comprend les informations de contact.

11. Système de communication selon la revendication 6, dans lequel l'unité de commande est en outre configurée pour exécuter une application de visualisation Web pour accéder à un URL lorsque l'au moins un deuxième contenu reçu comprend l'URL.
